Europäisches Patentamt

European Patent Office

Office européen des brevets

(19)

(11) Publication number: **0 275 608**
**B1**

(12)

# EUROPEAN PATENT SPECIFICATION

(45) Date of publication of the patent specification:
07.03.90

(51) Int. Cl.⁴: **F16H 9/24,** F16G 5/18

(21) Application number: **87202627.3**

(22) Date of filing: **24.12.87**

(54) Locking plate and pin assembly for the drive chain of a continuously variable transmission.

(30) Priority: **21.01.87 NL 8700144**

(43) Date of publication of application:
**27.07.88 Bulletin 88/30**

(45) Publication of the grant of the patent:
**07.03.90 Bulletin 90/10**

(84) Designated Contracting States:
**DE FR GB IT NL SE**

(56) References cited:
**EP-A- 0 060 008**
**EP-A- 0 102 673**
**DE-A- 2 006 332**
**FR-A- 2 338 411**
**GB-A- 1 152 952**
**GB-A- 2 059 004**

(73) Proprietor: **Volvo Car B.V., Steenovenweg 1, NL-5708 HN Helmond(NL)**

(72) Inventor: **Cadée, Theodorus Petrus Maria, 18, Heerbaan, NL-5721 LS Asten(NL)**
Inventor: **van Rooij, Jacobus Hubertus Maria, 201, Opwettenseweg, NL-5674 AC Nuenen(NL)**

(74) Representative: **Timmers, Cornelis Herman Johannes et al, EXTERPATENT B.V. P.O. Box 90649, NL-2509 LP 's-Gravenhage(NL)**

ACTORUM AG

## Description

The invention relates to a locking plate and pin assembly of the type described in the preamble of Claim 1.

Continuously variable transmissions in which the pins cooperating with the pulley discs are coupled together by links fitted round the pins are known, inter alia, from EP-A-0 060 008 and EP-A-0 102 673. Of course, the links fitted on the pins have to be secured one way or another against shifting in the lengthwise direction of the pin, and the solution given for this in EP-A-0 060 008 is to fit spring end clips which go through slots formed in the widened pin head cheeks, the hook-shaped ends of the clip legs enclosing the pin head. This design needs special, fairly deep slots to be made in the pin heads, thus weakening the pins, while the fitting of clips is an operation which is difficult to automate. The solution given in EP-A-0 102 673, consisting of the use of two mating, specially shaped plate-like parts, also requires the presence of fairly deep slots in the pin heads and is in particular intended for use with a transmission chain in which rolling spacers which slide in the lengthwise direction of the pins are used between the links and the pins.

The object of the invention is to produce a locking plate and pin assembly of particularly simple design, wherein the locking plate can be fitted on the ends of the pins easily and quickly using simple tools.

An assembly according to the invention is designed for this purpose in the manner specified in the characterizing part of the main Claim.

Advantageous embodiments are given in Claims 2 to 5, and as regards the latter Claim, it is pointed out that it describes an embodiment which is particularly suitable for use with a drive chain with a sliding rolling spacer, thus, as described in EP-A-0 102 673.

It is observed that the use of spring clips, fitting with resilient tongues around a shaft or pin for fastening machine elements thereto is known in the art, for instance from GB-A-1 152 952. However, these known clips are used for retaining elements which operate under quite different circumstances than the clips according to the invention which are during operation of the transmission chain subjected to high-frequency vibrations, and great circumferential and centrifugal forces and which must be capable to retain a number of aligned components, namely the adjacent links of the transmission chain. It is indeed surprising that the spring clips according to the invention, simple as they are, as practice has shown, capable of performing their function with excellent reliability. Furthermore the incisions at both sides of the central parts enclosing the head of the pins as used according to the invention are not disclosed in any prior art.

The invention will be explained with reference to the drawing.

Figure 1 is a side view of part of a transmission chain of the type in which the invention is used;

Figure 2 is an end view of the locking plate according to the invention;

Figure 3a is a half view of/half section through said locking plate;

Figure 3b is a half view of/half section through a variant thereof;

Figure 4 is a side view, partially in cross section, of a locking plate and pin assembly according to the invention;

Figure 5 is an end view thereof.

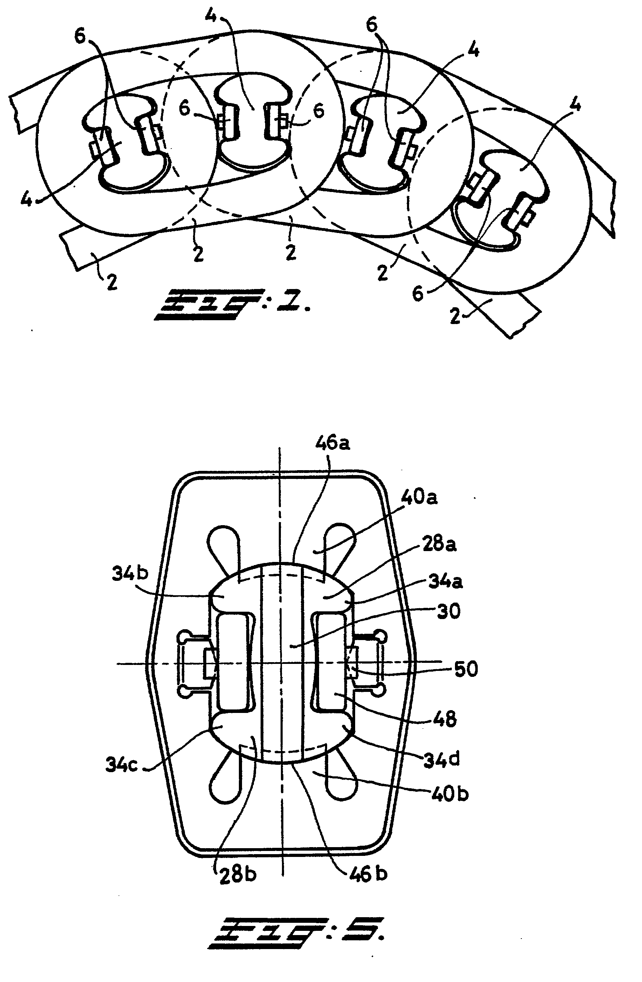

Figure 1 shows a part of a transmission chain, made up of links 2, which are intercoupled by means of a hinge pin 4, said hinge pins mating via rolling spacers 6 with the link openings, all this in the way described in EP-A-0 060 008. Of course, in such a transmission chain and also in a chain without such rolling spacers the outermost links of a set of links fitted on a pin must be secured against shifting in the lengthwise direction of the pin; known structures for this purpose are already described in EP-A-0 060 008 and EP-A-0 102 673.

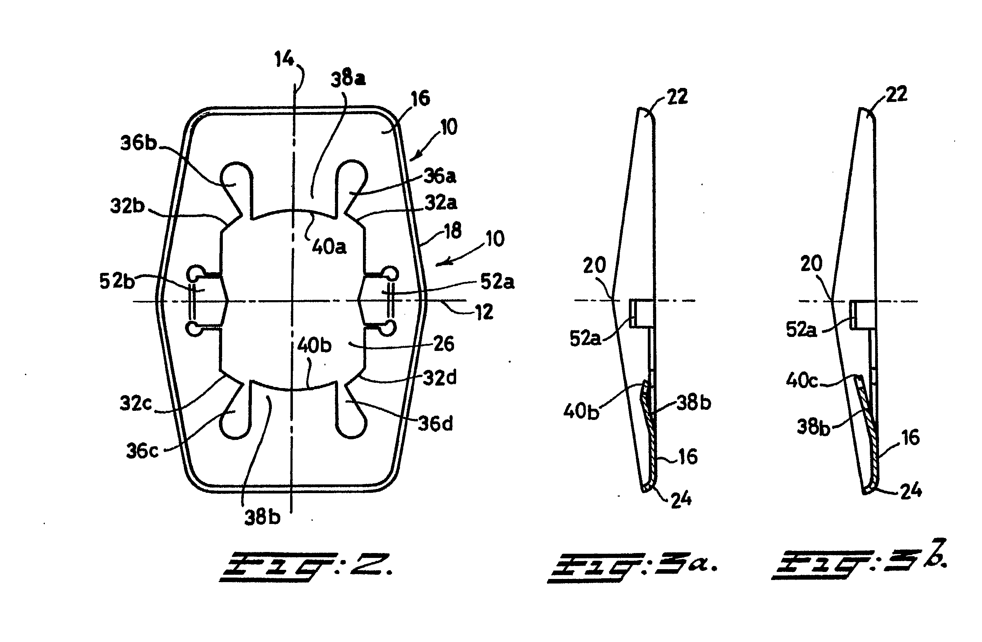

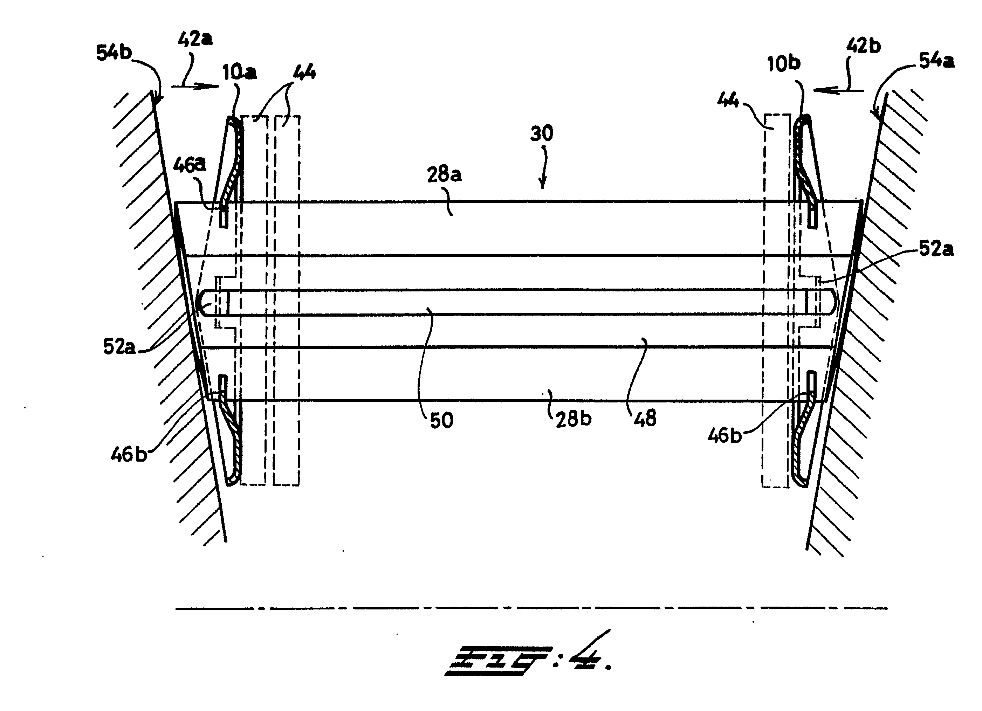

The locking plate used according to the invention is shown in front view in Figure 2, and in side view in Figure 3. This locking plate, indicated in its entirety by reference number 10, is symmetrical relative to both the central transverse plane 12 and the central longitudinal plate 14 and comprises a plate-type part 16 with a bent over edge 18, the height of which - as shown in Figure 3 in particular - decreases from the center 20 towards the ends 22 and 24.

The plate-type element 16 has a central opening 26 which (see Figure 5) is adapted to the contours of the pin heads 28a, 28b of the hinge pin 30 on which the locking plate must be fixed, in such a way that the four corners 32a-32d fit without play round the corners 34a-34d of the pin heads 28a and 28b.

Both the top edge and the bottom edge two opposite edge contours of the central opening 26 are interrupted by incisions 36a-36d, leaving two locking lips 38a, 38b whose edge contour 40a, 40b is adapted to the shape of the top wall of the pin heads 28a, 28b.

The end edges 40a, 40b project inwards a little further than the corner contours 32a-32d, while the locking lips 38a, 38b are bent out slightly in the manner shown in Figures 3a and 3b. The result is that the locking plate can move in only one direction, i.e. can be pressed from the end of the pin inwards on the pin, and once in position cannot be moved in the opposite direction without the exertion of pressure and without lasting deformation. The locking plates 10, 10b, shown in Figure 4, can thus only be pushed in the direction of the arrows 42a, 42b on the pin, enclosing the links 44 between them. The end edges 40a, 40b of the locking lips 38a and 38b are then standing virtually perpendicular to the central axis of the pin 30.

For assembly, the locking plates must be fitted over a predetermined distance on the pins, using a special tool, but the positioning of the locking plates and the locking effect thereby obtained are further improved by providing in the pin heads 28a, 28b shallow grooves 46a, 46b, into which fit the end edges 40a, 40b of the locking lips 38a, 38b. The embodiment according to Figure 3a is intended in particular for use in combination with a pin with such grooves, while the embodiment according to Figure 3b (in which corresponding parts are shown with the same reference numbers), which differs from the embodiment according to Figure 3a in that the ends indicated by 40c of the locking lips 38a, 38b are not slightly bent back, but are in line with said lips, can be used in combination with a pin without said grooves.

The transmission chain will preferably comprise rolling spacers, as shown by reference number 6 in Figure 1 and by reference number 48 in Figure 4. Such rolling spacers are provided with a central rib 50 and, as described in EP-A-0 102 673, are preferably fitted so that they can slide to a limited extent in the longitudinal direction of the pin. Two lips 52a, 52b are bent out of the plate 16 in order to secure these rolling spacers.

Figure 4 shows in side view how the ends of a pin 30 cooperate with the pulley surfaces 54a, 54b. This figure also shows the advantage of the shape of the flanged edges 18, the height of which decreases from the center of the locking plate towards the ends thereof: by means of this shape, the locking plates 10 can be fitted further outwards on the pin, and the space between the locking plates can thus be used in the optimally for the accommodation of links 44, in other words: when the number of links per pin, determined by the torque to be transmitted by the transmission, is set, due to this special shape, a short pin can be used resulting in a more compact transmission.

Another advantage of the structure according to the invention is that, as a result of the symmetrical shape, two fitting positions are possible, so that incorrect fitting is impossible. Moreover, the locking device is light in weight, contributing to a decrease of the total mass moment of inertia of the transmission.

## Claims

1. A locking plate and a pin assembly for a drive chain made up of links (2) of a continuously variable transmission for blocking the pins (4; 30) intercoupling said links (2) against shifting in their lengthwise direction, characterized in that the locking plate (10) comprises a pin accommodating opening (26), in which two opposite edge contours (40a, 40b) are adapted to the contours of the two pin heads (28a, 28b) in such a way that the pin head end edges (34a–34d) are enclosed by the plate (10) without play, while the central part of said two opposite edge contours is separated from corners (32–32d) of said opening (26) by means of two incisions (36a–36d) on either side thereof forming a spring locking lip (38a, 38b) which is bent out of the plate surface, the end edge of said locking lip cooperating with the central pin head part in such a way that after positioning the locking plate on the one pin end only a movement of said locking plate towards the other pin end is possible.

2. Assembly according to Claim 1, characterized in that grooves (46a, 46b) which mate with end edges of said respective locking lip (38a, 38b) are formed in the pin head (28a, 28b).

3. Assembly according to Claim 2, characterized in that, after fitting, said end edges of said locking lips lie in a plane parallel to the locking plate face.

4. Assembly according to Claims 1 to 3, characterized in that the locking plate (10) is symmetrical relative to the central transverse plane (center) (12) thereof and is provided with end edge parts (18) which are ben tover through 90 degrees, and the height of which decreases from said center of the locking plate towards the two ends.

5. Assembly according to Claims 1 to 4, with pins in which the body part of the pin mates with the links by means of a folling spacer (48) provided with a central rib (50) which slides in the lengthwise direction of the pin, the length of said spacers is slightly shorter than same of the pin, characterized in that in the center the locking plate has a lip (52a, 52b) bent out over 90 degreese out of the locking plate face in the same direction as the locking lip, said lip (52a, 52b) lies in the center of the locking plate in order to secure said rolling spacers (48).

6. Transmission chain of a continuously variable transmission, provided with locking plate and pin assemblies, according to one or more of Claims 1 to 5.

## Revendications

1. Ensemble plaque de retenue et axe pour chaîne de transmission, composée de maillons (2), d'une transmission variable en continu, afin de bloquer les axes (4, 30) d'acouplement desdits maillons (2), de manière à éviter leur déplacement dans la direction longitudinale, caractérisé en ce que la plaque de retenue (10) présente une ouverture (26) recevant l'axe, dans laquelle les contours de deux bords opposés (40a, 40b) sont adaptés aux contours de deux têtes d'axes (28a, 28b), de manière à ce que les bords d'extrémité (34a, 34b) des têtes des axes soient entourés sans jeu par la plaque (10), tandis que la partie centrale desdits contours des deux bords opposés est séparée des angles (32a–32d) de ladite ouverture (26) au moyen de deux incisions (36a–35d) pratiquées de chaque côté de celle-ci et formant une lèvre élastique de verrouillage (38a, 38b) qui fait saillie par inflexion de la surface de la plaque, le bord d'extrémité de ladite lèvre de verrouillage coopérant avec la partie centrale de la tête de l'axe de manière à ce que, lorsque la plaque de retenue a été positionnée sur l'extrémité d'un axe, seul un déplacement de ladite plaque de retenue vers l'autre extrémité de l'axe soit possible.

2. Ensemble selon la revendication 1, caractérisé en ce que des rainures (46a, 46b) qui coopèrent avec les bords d'extrémité de ladite lèvre de verrouillage (38, 38b) sont réalisées dans la tête (28a, 28b) de l'axe.

3. Ensemble selon la revendication 2, caractérisé en ce que, après leur engagement, lesdits bords d'extrémité desdites lèvres de verrouillage sont situés dans un plan parallèle à la surface de la plaque de retenue.

4. Ensemble selon les revendications 1 à 3, caractérisé en ce que la plaque de retenue (10) est symétrique par rapport à son plan médian transversal (centre) (12) et présente des parties de bord (18) infléchies de 90° dont la hauteur diminue à partir du centre de la plaque vers les deux extrémités.

5. Ensemble selon la revendication 1 à 4, comprenant des axes, dans lequel le corps de l'axe coopère avec les maillons au moyen d'une pièce d'écartement à roulements (48) munie d'une nervure centrale (50) qui coulisse dans la direction longitudinale de l'axe, la longueur desdites pièces d'écartement étant légèrement plus courte que celle de l'axe, caractérisé en ce que la plaque de retenue possède dans son centre un lèvre (52a, 52b) infléchie de 90° et faisant saillie de la surface de la plaque de retenue dans la même direction que la lèvre de verrouillage, ladite lèvre (52a, 52b) étant située au centre de la plaque de retenue, afin de maintenir lesdites pièces d'écartement (48).

6. Chaîne de transmission pour transmission à variation continue possédant un ensemble de plaques de retenue et d'axes selon l'une ou plusieurs des revendications 1 à 5.

## Patentansprüche

1. Aus einem Klemmorgan und einem Bolzen zusammengesetzte Anordnung für eine aus Gliedern (2) gebildete Triebkette eines stufenlosen Getriebes, zum Blockieren der Bolzen (4; 30), welche die Glieder (2) gegen eine Verschiebung in ihrer Längsrichtung miteinander koppeln, dadurch gekennzeichnet, daß das Klemmorgan (Klemmscheibe) (10) eine mit einem Bolzen zusammenpassende Öffnung (26) aufweist, in welcher zwei einander entgegengesetzte Kantenkonturen (40a, 40b) an die Konturen der beiden Bolzenköpfe (28a, 28b) in der Weise angepaßt sind, daß die Endkanten (34a–34d) der Bolzenköpfe ohne Spiel durch das Klemmorgan (10) eingeschlossen sind, wobei der mittlere Abschnitt oder Teil der beiden einander gegenüberliegenden Kantenkonturen von Ecken (32a–32d) der genannten Öffnung (26) mittels zweier Einschnitte (36a–36d) getrennt ist, die an einer jeden Seite des mittleren Teils angeordnet sind, wodurch eine federnde Klemmzunge (38a, 38b) gebildet ist, welche aus der Klemmorganoberfläche heraus gebogen ist, und wobei eine endseitige Kante der Klemmzunge mit einem mittleren Bolzenkopfteil in der Weise zusammenwirkt, daß nach dem Positionieren des Klemmorgans an dem einen Bolzenende nur eine Bewegung dieses Klemmorgans gegen das andere Bolzenende ermöglicht ist.

2. Anordnung nach Anspruch 1, dadurch gekennzeichnet, daß in den Bolzenköpfen (28a, 28b) Nuten (46a, 46b) ausgebildet sind, die mit endseitigen Kanten der jeweiligen Klemmzunge (38a, 38b) zusammenpassen.

3. Anordnung nach Anspruch 2, dadurch gekennzeichnet, daß nach dem Zusammensetzen die endseitigen Kanten der Klemmzungen in einer parallel zu der Fläche des Klemmorgans verlaufenden Ebene liegen.

4. Anordnung nach den Ansprüchen 1–3, dadurch gekennzeichnet, daß das Klemmorgan (10) in bezug auf seine zentrale querverlaufende Ebene (Zentrum) (12) symmetrisch ausgebildet und mit endseitigen Kantenabschnitten (18) versehen ist, die um 90 Grad umgebogen sind und deren Höhe von dem Zentrum des Klemmorgans ausgehend gegen seine beiden Enden zu abnimmt.

5. Anordnung nach den Ansprüchen 1–4, mit Bolzen, in denen der Hauptteil des Bolzens mit den Gliedern mittels eines eine mittlere Rippe (50) aufweisenden Wälz-Abstandsstückes zusammenwirkt, welches in der Längsrichtung des Bolzen gleitet, wobei die Länge der Abstandsstücke geringfügig kürzer ist als die Länge des Bolzens, dadurch gekennzeichnet, daß das Klemmorgan in der Mitte eine Lippe (52a, 52b) aufweist, die um 90 Grad aus der Ebene oder Fläche des Klemmorgans ausgebogen ist und zwar in der selben Richtung wie die Klemmzunge, wobei die Lippe (52a, 52b) in der Mitte des Klemmorgans liegt, um die Wälz-Abstandsstücke (48) zu sichern.

6. Triebkette eines stufenlosen Getriebes, die mit aus Klemmorgan und Bolzen zusammengesetzten Anordnungen entsprechend einem oder mehreren der Ansprüche 1–5 versehen ist.

*Fig: 1.*

*Fig: 5.*

_FIG:2._

_FIG:3a._

_FIG:3b._

EP 0 275 608 B1

Fig. 4.